# EUROPÄISCHE PATENTSCHRIFT

(11) **EP 3 532 723 B1**
(45) Veröffentlichungstag und Bekanntmachung des Hinweises auf die Patenterteilung: **13.04.2022**
(21) Anmeldenummer: 17772719.5
(22) Anmeldetag: 27.09.2017
(51) Int. Cl.: F02M 61/16, F16K 31/06, F02M 26/67, F16K 1/36, F16K 27/02, F01L 1/344

(54) **MAGNETVENTIL FÜR EINE VERBRENNUNGSKRAFTMASCHINE**
SOLENOID VALVE FOR AN INTERNAL COMBUSTION ENGINE
ÉLECTROVANNE POUR UN MOTEUR À COMBUSTION INTERNE

(30) Priorität: 27.10.2016 DE 102016120551
(43) Veröffentlichungstag der Anmeldung: 04.09.2019
(73) Patentinhaber: Pierburg GmbH, 41460 Neuss (DE)
(72) Erfinder: YILMAZ, Turgut, 50739 Köln (DE); LAPPAN, Rolf, 50733 Köln (DE); HENZE, Nikolaus, 41462Neuss (DE); GRÜNHAGEN, Thomas, 42549 Velbert (DE); ROMANOWSKI, Lukas, 40477 Düsseldorf (DE); SCHWARZ, Markus, 41372 Niederkrüchten (DE)
(74) Vertreter: terpatent Patentanwälte ter Smitten Eberlein-Van Hoof Rütten Daubert
(86) Internationale Anmeldenummer: PCT/EP2017/074494
(87) Internationale Veröffentlichungsnummer: WO 2018/077561

(56) Entgegenhaltungen:
- DE-A1- 3 149 306
- DE-A1-102008 002 562
- DE-A1-102009 006 353
- DE-A1-102014 214 362
- US-A1- 2012 186 547

## Beschreibung

Die vorliegende Erfindung betrifft ein Magnetventil für eine Verbrennungskraftmaschine mit einem Gehäuse, einer Spule, einem Anker, welcher durch Bestromung der Spule axial bewegbar ist, und einem am Ventilkörper ausbildenden Stößel, welcher mit dem Anker bewegbar ist.

Solche Magnetventile werden häufig dazu eingesetzt, durch Öffnen oder Schließen des Ventils die Kolbenböden einer Verbrennungskraftmaschine mit Kühlmedium zu versorgen.

Die JP 2013-29147 A offenbart ein Magnetventil mit einem Gehäuse, in welchem eine Spule angeordnet ist, die auf einen Spulenträger gewickelt ist. Der Spulenträger weist eine Hülsenöffnung auf, in welcher eine Gleitbuchse angeordnet ist. Innerhalb der Gleitbuchse ist ein Magnetanker durch Bestromung der Spule axial bewegbar. Der Magnetanker ist über eine Verbindungsstange mit einem Stößel verbunden, welcher durch axiales Bewegen einen Ventildurchlass öffnet oder schließt. Der Stößel ist von einer Druckfeder umgeben, welche an eine vom Stößel ausgebildete radiale Verbreiterung vorgespannt anliegt. Die Druckfeder bringt entgegen der Kraft des Magnetankers bei Bestromung der Spule eine Druckkraft auf den Stößel auf, so dass in einem nicht bestromten Zustand des Magnetankers, dieser und der Stößel in eine Ruheposition bewegt werden.

Des Weiteren ist aus der DE 10 2009 006 353 A1 ein elektromagnetisches Wegeventil bekannt, welches einen zweiteiligen Stößel aufweist. Die beiden Teile des Stößels sind im Wesentlichen rohrförmig ausgeführt und werden übereinander geschoben.

Die DE 10 2008 002 562 A1 offenbart ein elektrisches Schieberventil, dessen Schieber eine konische Öffnung aufweist, in die ein Schaft ragt, der mit seinem entgegengesetzten Ende gegen den Anker anliegt. Dieser Schaft dient wie eine Ventilstange zur Bewegungsübertragung.

Ein ähnlicher Aufbau wird auch in der DE 10 2014 214 362 A1 offenbart, in der ein Tassenschaft mit dem Anker verbunden ist und axial gegen einen Schieber des Ventils anliegt.

Zusätzlich wird in der US 2012/0186547 A1 ein Elektromagnetventil beschrieben, an dessen Schieber ein ringförmiger Stopper befestigt ist.

Obwohl der Stand der Technik viele verschiedene Lösungen für ein Magnetventil vorschlägt, besteht ständig der Bedarf an noch preiswerteren Magnetventilen. Ein Magnetventil wird regelmäßig dann preiswerter, wenn es wirtschaftlicher herstellbar ist.

Die Aufgabe der vorliegenden Erfindung liegt somit darin, ein Magnetventil für eine Verbrennungskraftmaschine zu schaffen, welches wirtschaftlich herstellbar ist.

Diese Aufgabe wird durch ein Magnetventil für eine Verbrennungskraftmaschine mit den Merkmalen des Anspruchs 1 gelöst.

Bei dem erfindungsgemäßen Magnetventil ist der Stößel zweiteilig ausgebildet, wobei ein erstes Teil des Stößels ein Rohr und ein zweites Teil des Stößels eine Kappe ist. Die Kappe und das Rohr sind somit unabhängig voneinander. Unter einer Kappe im Sinne der vorliegenden Erfindung ist ein Bauteil zu verstehen, mit welchem etwas abgedeckt werden kann. Erfindungsgemäß wird ein Ende des Rohres mit Hilfe der Kappe abgedeckt. Durch die Zweiteiligkeit des Stößels können die Kappe und das Rohr unabhängig voneinander hergestellt werden. Dadurch können das Herstellungsverfahren und das Material für das jeweilige Teil optimiert werden. Dadurch kann der Stößel und damit das Magnetventil wirtschaftlicher hergestellt werden. Die Kappe des Stößels ist somit topfförmig ausgebildet und weist einen sich radial erweiternden Rand, der auf dem Rohr aufliegt, auf und liegt mit einer Mantelfläche der topfförmigen Kappe an einer Innenwand des Rohres an. Die Kappe wird somit in einer axialen Richtung des Rohres durch den radial erweiternden Rand auf dem Rohr gehalten. In dieser axialen Richtung kann somit über die Kappe eine Kraft auf das Rohr übertragen werden, so dass der Stößel mit dem Anker über eine Verbindungsstange, welche mit der topfförmigen Kappe in Kontakt ist, in einer Gleitbuchse axial bewegbar ist. Als Mantelfläche wird dabei die die topfförmige Kappe radial begrenzende Fläche verstanden. Durch die erfindungsgemäße Anordnung von Mantelfläche zu Innenwand wird ein maximaler flächenmäßiger Kontakt erzielt, wodurch eine Verbindung zwischen Rohr und Kappe verbessert ist. Zusätzlich wird durch den Kontakt der Mantelfläche mit der Innenwand des Rohres eine zentrische Anordnung von der Kappe in dem Rohr erzielt.

In einer bevorzugten Ausführung der Erfindung ist das Rohr ein Drehteil. Unter einem Drehteil wird verstanden, dass das Rohr mittels eines zerspannenden Fertigungsverfahrens hergestellt wird, bei dem sich das Teil um die eigene Achse dreht. Mittels eines solchen Verfahrens, ist das Rohr einfach und wirtschaftlich herstellbar.

Vorzugsweise ist die Kappe ein Tiefzieh-Stanzteil. Die Kappe wird somit durch die Verfahrensschritte des Stanzens und des Tiefziehens hergestellt. Diese Verfahrensschritte benötigen bei einer Massenfertigung wenig Zeit, so dass der Ausstoß an Kappen sehr hoch ist. Dadurch werden die Produktionskosten des Magnetventils gesenkt.

In einer bevorzugten Weiterbildung der Erfindung sind das Rohr und die Kappe über eine Presspassung miteinander verbunden. Mittels einer Presspassung, kann auf einfache und wirtschaftliche Weise eine kraftschlüssige Verbindung zwischen Rohr und Kappe hergestellt werden. Dadurch können die Produktionskosten gesenkt werden.

Vorteilhafterweise ist in einem Boden der topfförmigen Kappe wenigstens eine Druckausgleichsbohrung ausgebildet. Die Druckausgleichsbohrung durchdringt dabei den Boden der topfförmigen Kappe in vorzugsweise axialer Richtung. Eine Unterseite des Bodens der topfförmigen Kappe wird dadurch mit einer Oberseite der topfförmigen Kappe fluidisch verbunden. Dadurch wird ein Druckunterschied an der Unterseite des Bodens der topfförmigen Kappe zu der Oberseite der topfförmigen Kappe über die Druckausgleichsbohrung ausgeglichen.

Der Stößel ist vorzugsweise in einer Gleitbuchse geführt bewegbar. Durch die Gleitbuchse werden die Gleiteigenschaften des Stößels im Gehäuse verbessert.

In einer vorteilhaften Ausgestaltung weist das Magnetventil eine Druckfeder auf, die gegen den radial erweiternden Rand der topfförmigen Kappe vorgespannt anliegt, wobei die Druckfeder eine Kraft entgegen einer Bewegungsrichtung des Ankers bei Bestromung der Spule auf den Stöße! aufbringt. Der radial erweiternde Rand überragt dabei das Rohr radial so weit, dass eine Auflagefläche für die Druckfeder gebildet wird. Durch die Druckfeder wird somit sichergestellt, dass der Stößel auch entgegen der Kraft des Elektromagneten zwischen zwei axialen Endpositionen bewegbar ist, so dass das Ventil zu öffnen und zu schließen ist.

Die Kappe besteht vorzugsweise aus Blech. Blech ist ein günstiges Material, welches zudem leicht zu verarbeiten ist. Dadurch kann das Magnetventil wirtschaftlicher hergestellt werden.

Besonders vorteilhaft ist es, dass das Gehäuse zweiteilig ausgebildet ist, wobei ein erstes Gehäuseteil die Gleitbuchse und den Stößel aufweist und in einem zweiten Gehäuseteil der Spulenträger und der Anker angeordnet sind, und dass das erste Gehäuseteil mit dem zweiten Gehäuseteil mechanisch verbunden ist. Der Elektromagnet ist dadurch für unterschiedliche Anschlüsse nutzbar. Darüber hinaus ist bei einem Schadensfall jedes Teil einzeln austauschbar, so dass nicht das ganze Magnetventil ausgetauscht werden muss.

Es wird somit ein Magnetventil für eine Verbrennungskraftmaschine geschaffen, welches wirtschaftlich herstellbar ist.

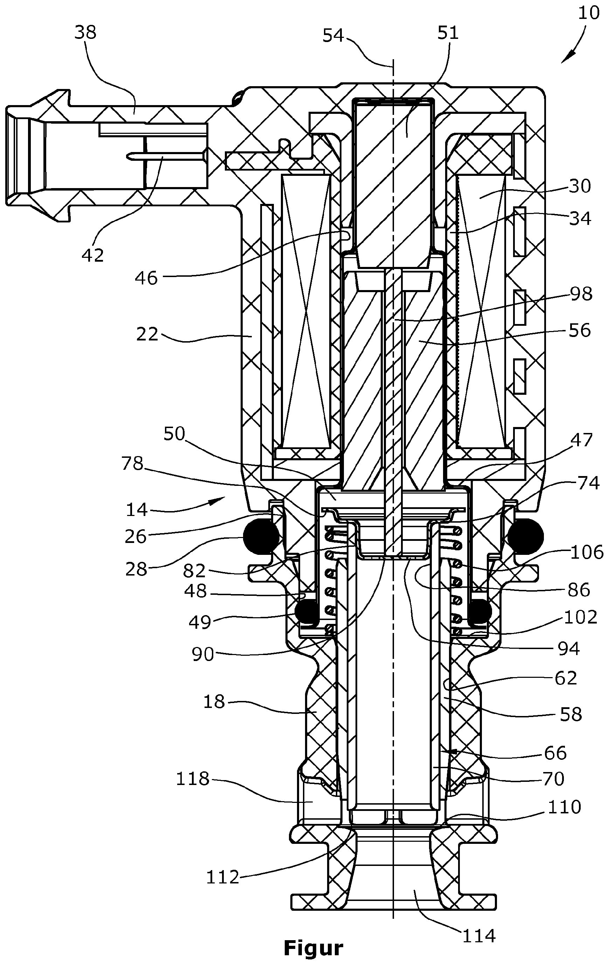

Weitere Einzelheiten und Vorteile der vorliegenden Erfindung ergeben sich aus der nachfolgenden Beschreibung des Ausführungsbeispiels in Verbindung mit der Zeichnung. In dieser zeigt:
- Figur:: Schnittdarstellung eines erfindungsgemäßen Magnetventils für eine Verbrennungskraftmaschine.

Die Figur zeigt eine Schnittdarstellung eines erfindungsgemäßen Magnetventils 10 für eine Verbrennungskraftmaschine. Das Magnetventil 10 umfasst ein Gehäuse 14, welches zweiteilig aus einem ersten Gehäuseteil 18, welches als Ventilgehäuse dient, und einem zweiten Gehäuseteil 22 gebildet ist. Beide Gehäuseteile 18, 22 sind an einer Verbindungsstelle 26 kraftschlüssig über beispielsweise eine Laserschweißverbindung verbunden. In dem Bereich der Verbindungsstelle 26 ist ein erster O-Ring 28 angeordnet, welcher das Magnetventil 10 nach außen hin abdichtet.

Innerhalb des zweiten Gehäuseteils 22 ist eine Spule 30 angeordnet, welche aus einem Spulendraht gebildet ist, der auf einen Spulenträger 34 gewickelt ist. Das zweite Gehäuseteil 22 bildet einen Stecker 38 mit Steckkontakten 42 aus, über welchen die Spule 30 bestrombar ist. Die Spule 30 weist eine Spulenträgerbohrung 46 auf, in weicher eine Führungshülse 47 angeordnet ist, welche sich bis in das erste Gehäuseteil 18 erstreckt. Zwischen einer Gehäuseaußenwand 48 des ersten Gehäuseteils 18 und der Führungshülse 47 ist ein zweiter O-Ring 49 angeordnet, so dass ein Gehäuseinnenraum 50 nach außen abgedichtet ist. In der Führungshülse 47 ist ein Anker 51 angeordnet, der durch Bestromung der Spule 30 in Richtung einer Mittelachse 54 des zweiten Gehäuseteils 22 axial zu einem Kern 56 bewegbar ist.

In dem ersten Gehäuseteil 18 ist eine metallische Gleitbuchse 58 in einer Bohrung 62 des ersten Gehäuseteils 18 angeordnet. Die Gleitbuchse 58 nimmt einen, einen Ventilkörper ausbildenden, zweiteiligen Stößel 66 auf, wobei ein erstes Teil des Stößels 66 ein Rohr 70 und ein zweites Teil eine topfförmige Kappe 74 ist. Die topfförmige Kappe 74, welche ein Tiefzieh-Stanzteil ist, bildet einen radial erweiternden Rand 78 aus, welcher auf dem als Drehteil ausgeführten Rohr 70 aufliegt. Die topfförmige Kappe 74 ist über eine Presspassung mit dem Rohr 70 verbunden, wobei eine Mantelfläche 82 der topfförmigen Kappe 74 an einer Innenwand 86 des Rohres 70 anliegt. In einem Boden 90 der topfförmigen Kappe 74 sind mehrere Druckausgleichsbohrungen 94 ausgebildet, über welche ein Druckunterschied zwischen der Unterseite der Kappe und der Oberseite der Kappe verhindert wird, so dass das Ventil mit geringer Kraft geschaltet werden kann.

Der Stößel 66 ist mit dem Anker 51 über eine Verbindungsstange 98, welche mit der topfförmigen Kappe 74 in Kontakt ist, in der Gleitbuchse 58 axial bewegbar. Zwischen dem radial erweiternden Rand 78 der topfförmigen Kappe 74, welcher das Rohr 70 radial überragt, und einem Absatz 102 im ersten Gehäuseteil 18, ist eine Druckfeder 106 vorgespannt angeordnet, welche auf den Stößel 66 eine Kraft in Richtung des Ankers 51 aufbringt, so dass der Stößel 66 ständig gegen die Verbindungsstange 98 gedrückt wird. Ein zu dem Anker 51 entgegengesetztes axiales Ende des Stößels 66 wirkt mit einem abgerundeten Ventilsitz 110 zusammen, wobei das Rohr 70 mit einer dünnen Kante 112 auf dem Ventilsitz 110 aufliegt, so dass beim Öffnen eine durch die Strömung auf den Stößel 66 wirkende Schließkraft geringer ist. Im nicht bestromten Zustand ist eine Verbindung zwischen einem in axialer Richtung am Ende des Gehäuses 18 angeordneten Ventileingang 114 und einem in radialer Richtung am Ende des Gehäuses 18 angeordneten Ventilausgang 118 freigegeben. Im bestromten Zustand ist der Stößel 66 mit dem Ventilsitz 110 in Kontakt und verschließt die Verbindung zwischen Ventileingang 114 und Ventilausgang 118.

Bei dem beschriebenen erfindungsgemäßen Magnetventil wird durch einen zweiteiligen Aufbau des Stößels die Herstellbarkeit von diesem vereinfacht. Dadurch können die Herstellungskosten des Magnetventils gesenkt werden.

Es sollte deutlich sein, dass der Schutzbereich nicht auf die beschriebenen Ausführungsbeispiele eines Magnetventils beschränkt ist, sondern verschiedene Modifikationen und konstruktive Änderungen denkbar sind. Beispielsweise kann die Kappe auch über eine Schweißverbindung mit dem Rohr verbunden sein.

### Bezugszeichenliste

- 10: Magnetventil
- 14: Gehäuse
- 18: erstes Gehäuseteil
- 22: zweites Gehäuseteil
- 26: Verbindungsstelle
- 28: erster O-Ring
- 30: Spule
- 34: Spulenträger
- 38: Stecker
- 42: Steckkontakte
- 46: Spulenträgerbohrung
- 47: Führungshülse
- 48: Gehäuseaußenwand
- 49: zweiter O-Ring
- 50: Gehäuseinnenraum
- 51: Anker
- 54: Mittelachse
- 56: Kern
- 58: Gleitbuchse
- 62: Bohrung
- 66: Stößel
- 70: Rohr
- 74: Kappe
- 78: radial erweiternden Rand
- 82: Mantelfläche
- 86: Innenwand
- 90: Boden
- 94: Druckausgleichsbohrung
- 98: Verbindungsstange
- 102: Absatz
- 106: Druckfeder
- 110: Ventilsitz
- 112: dünne Kante
- 114: Ventileingang
- 118: Ventilausgang

## Patentansprüche

1. Magnetventil (10) für eine Verbrennungskraftmaschine mit:
- einem Gehäuse (14),
- einer Spule (30),
- einem Anker (51), welcher durch Bestromung der Spule (30) axial bewegbar ist,
- einem einen Ventilkörper ausbildenden Stößel (66), welcher mit dem Anker (51) bewegbar ist,
wobei der Stößel (66) zweiteilig ausgebildet ist, wobei ein erstes Teil des Stößels (66) ein Rohr (70) und ein zweites Teil des Stößels (66) eine Kappe (74) ist, die topfförmig ausgebildet ist, mit einem sich radial erweiternden Rand (78) auf dem Rohr (70) aufliegt und mit einer Mantelfläche (82) an einer Innenwand (86) des Rohres (70) anliegt, **dadurch gekennzeichnet, dass** der Stößel (66) mit dem Anker (51) über eine Verbindungsstange (98), welche mit der topfförmigen Kappe (74) in Kontakt ist, in
einer Gleitbuchse (58) axial bewegbar ist.

2. Magnetventil (10) für eine Verbrennungskraftmaschine nach Anspruch 1, **dadurch gekennzeichnet, dass** das Rohr (70) ein Drehteil ist.

3. Magnetventil (10) für eine Verbrennungskraftmaschine nach Anspruch 1 oder 2, **dadurch gekennzeichnet, dass** die Kappe (74) ein Tiefzieh-Stanzteil ist.

4. Magnetventil (10) für eine Verbrennungskraftmaschine nach einem der vorherigen Ansprüche, **dadurch gekennzeichnet, dass** das Rohr (70) und die Kappe (74) über eine Presspassung miteinander verbunden sind.

5. Magnetventil (10) für eine Verbrennungskraftmaschine nach einem der vorhergehenden Ansprüche, **dadurch gekennzeichnet, dass** in einem Boden (90) der topfförmigen Kappe (74) wenigstens eine Druckausgleichsbohrung (94) ausgebildet ist.

6. Magnetventil (10) für eine Verbrennungskraftmaschine nach einem der vorhergehenden Ansprüche, **dadurch gekennzeichnet, dass** eine Druckfeder (106), die gegen den radial erweiternden Rand (78) der topfförmigen Kappe (74) vorgespannt anliegt, wobei die Druckfeder (106) eine Kraft entgegen einer Bewegungsrichtung des Ankers (51) bei Bestromung der Spule (30) auf den Stößel (66) aufbringt.

7. Magnetventil (10) für eine Verbrennungskraftmaschine nach einem der vorherigen Ansprüche, **dadurch gekennzeichnet, dass** die Kappe (74) aus Blech besteht.

8. Magnetventil (10) für eine Verbrennungskraftmaschine nach einem der vorherigen Ansprüche, **dadurch gekennzeichnet, dass** das Gehäuse (14) zweiteilig ausgebildet ist, wobei ein erstes Gehäuseteil (18) die Gleitbuchse (58) und den Stößel (66) aufweist und in einem zweiten Gehäuseteil (22) der Spulenträger (34) und der Anker (51) angeordnet sind, und dass das erste Gehäuseteil (18) mit dem zweiten Gehäuseteil (22) mechanisch verbunden ist.

## Claims

1. Solenoid valve (10) for an internal combustion engine with:
- a housing (14),
- a coil (30)
- an armature (51) which is axially movable by energizing the coil (30),
- a plunger (66) forming a valve body and movable with the armature (51),
wherein the plunger (66) is a two-piece part, a first part of the plunger (66) being a tube (70) and a second part of the plunger (66) being a cap (74) which is of a pot-shaped configuration, rests on the tube (70) with a radially widening rim (78) and rests with a circumferential surface (82) against an inner wall (86) of the tube (70) **characterized in that**
the plunger (66) is axially movable with the armature (51) in a sliding bush (58) via a connecting rod (98) which is in contact with the cup-shaped cap (74).

2. Solenoid valve (10) for an internal combustion engine according to claim 1,
**characterized in that**
the tube (70) is a turned part.

3. Solenoid valve (10) for an internal combustion engine according to claim 1 or 2,
**characterized in that**
the cap (74) is a deep-drawing stamped part.

4. Solenoid valve (10) for an internal combustion engine according to any one of the preceding claims,
**characterized in that**
the tube (70) and the cap (74) are connected to each other by an interference fit.

5. Solenoid valve (10) for an internal combustion engine according to one of the preceding claims,
**characterized in that**
at least one pressure compensation hole (94) is configured in a bottom (90) of the cup-shaped cap (74).

6. Solenoid valve (10) for an internal combustion engine according to one of the preceding claims,
**characterized in that**
a compression spring (106) biased against the radially expanding edge (78) of the cup-shaped cap (74), the compression spring (106) applying a force to the plunger (66) against a direction of movement of the armature (51) when the coil (30) is energized.

7. Solenoid valve (10) for an internal combustion engine according to any of the preceding claims,
**characterized in that**
the cap (74) is made of sheet metal.

8. Solenoid valve (10) for an internal combustion engine according to one of the previous claims,
**characterized in that**
the housing (14) is a two-piece part, a first housing part (18) comprising the sliding bush (58) and the plunger (66) and in a second housing part (22) the coil carrier (34) and the armature (51) are arranged, and **in that** the first housing part (18) is mechanically connected to the second housing part (22).

## Revendications

1. Electrovanne (10) pour un moteur à combustion interne avec :
- un boîtier (14),
- une bobine (30)
- une armature (51) qui est déplaçable axialement en alimentant la bobine (30),
- un plongeur (66) formant un corps de vanne et déplaçable avec l'armature (51),
dans lequel le plongeur (66) est une pièce en deux parties, une première partie du plongeur (66) étant un tube (70) et une seconde partie du plongeur (66) étant un capuchon (74) qui a une configuration en forme de pot, repose sur le tube (70) avec un bord s'élargissant radialement (78) et repose avec une surface circonférentielle (82) contre une paroi interne (86) du tube (70) **caractérisé en ce que**
le plongeur (66) est déplaçable axialement avec l'armature (51) dans une douille glissante (58) par l'intermédiaire d'une bielle (98) qui est en contact avec le capuchon en forme de coupelle (74).

2. Electrovanne (10) pour un moteur à combustion interne selon la revendication 1,
**caractérisée en ce que**
le tube (70) est une pièce tournée.

3. Electrovanne (10) pour un moteur à combustion interne selon la revendication 1 ou 2,
**caractérisée en ce que**
le capuchon (74) est une pièce emboutie par emboutissage profond.

4. Electrovanne (10) pour un moteur à combustion interne selon l'une quelconque des revendications précédentes,
**caractérisée en ce que**
le tube (70) et le capuchon (74) sont reliés l'un à l'autre par un ajustement serré.

5. Electrovanne (10) pour moteur à combustion interne selon l'une des revendications précédentes,
**caractérisée en ce que**
au moins un orifice de compensation de pression (94) est configuré dans un fond (90) du capuchon en forme de coupelle (74).

6. Electrovanne (10) pour moteur à combustion interne selon l'une des revendications précédentes,
**caractérisée en ce que**
un ressort de compression (106) sollicité contre le bord d'expansion radiale (78) du capuchon en forme de coupelle (74), le ressort de compression (106) appliquant une force sur le plongeur (66) à l'encontre d'une direction de déplacement de l'armature (51) lorsque la bobine (30) est énergisée.

7. Electrovanne (10) pour un moteur à combustion interne selon l'une quelconque des revendications précédentes,
**caractérisée en ce que**
la coupelle (74) est réalisée en métal en feuille.

8. Electrovanne (10) pour moteur à combustion interne selon l'une des revendications précédentes,
**caractérisée en ce que**
le boîtier (14) est une pièce en deux parties, une première partie de boîtier (18) comprenant la douille coulissante (58) et le plongeur (66) et dans une deuxième partie de boîtier (22) sont disposés le support de bobine (34) et l'induit (51), et **en ce que** la première partie de boîtier (18) est connectée mécaniquement à la deuxième partie de boîtier (22).
